# EUROPEAN PATENT SPECIFICATION

(11) **EP 4 477 904 B1**
(45) Date of publication and mention of the grant of the patent: **02.09.2026**
(21) Application number: 23752850.0
(22) Date of filing: 07.02.2023
(51) Int. Cl.: F16C 33/41, F16C 19/06, F16C 33/44, F16C 33/78

(54) **GREASE-FILLED BALL BEARING**
FETTGEFÜLLTES KUGELLAGER
ROULEMENT À BILLES REMPLI DE GRAISSE

(30) Priority: 10.02.2022 JP 2022019647
(43) Date of publication of application: 18.12.2024
(73) Proprietor: NTN Corporation, Osaka-shi Osaka 530-0005 (JP)
(72) Inventor: NAKAO Goro, Iwata-shi, Shizuoka 438-8510 (JP); OBATA Tomohiko, Kuwana-shi, Mie 511-0867 (JP)
(74) Representative: Grünecker Patent- und Rechtsanwälte PartG mbB
(86) International application number: PCT/JP2023/003926
(87) International publication number: WO 2023/153386

(56) References cited:
- JP-A- 2003 214 438
- JP-A- 2004 092 682
- JP-A- 2005 214 259
- JP-A- 2005 214 259
- JP-A- 2012 163 172
- JP-A- 2012 163 172
- JP-A- 2018 062 942
- JP-A- 2018 062 942
- JP-A- 2018 066 396
- JP-A- 2018 066 396
- JP-A- 2019 002 498
- JP-A- 2019 002 498
- JP-A- H08 291 826
- JP-A- H11 210 757
- JP-A- H11 210 757
- US-B2- 10 570 961
- US-B2- 6 890 105

## Description

### TECHNICAL FIELD

The present invention relates to a grease-enclosed ball bearing in which grease is enclosed in an annular bearing space defined between an inner ring and an outer ring.

### BACKGROUND ART

As a bearing for supporting a rotary shaft of an automobile, an industrial machine, or the like, a grease-enclosed ball bearing is known in which grease is enclosed in an annular bearing space defined between an inner ring and an outer ring (for example, the below-identified Patent Documents 1 to 3).

The below-identified Patent Documents 1 to 3 each discloses a grease-enclosed ball bearing including an inner ring; an outer ring arranged radially outward of and coaxially with the inner ring; a plurality of balls disposed in a bearing space defined between the inner ring and the outer ring; and annular seal members disposed on the ends of the bearing space on both axial sides; grease enclosed in the bearing space; and a cage retaining the balls. As the cage, a so-called crown-type cage is used which includes a circumferentially extending cage circular annular portion; and cage claws having a cantilevered structure, and axially extending from the cage circular annular portion so as to be located between the respective circumferentially adjacent pairs of balls.
A ball bearing according to the preamble of independent claim 1 is disclosed in JP 2012 163172 A. A further example of a ball bearing is disclosed in JP 2018 066396 A.

### PRIOR ART DOCUMENT

### PATENT DOCUMENTS

Patent Document 1: Japanese Patent No. 6940993
Patent Document 2: Japanese Unexamined Patent Application Publication No. 2020-128786
Patent Document 3: Japanese Unexamined Patent Application Publication No. 2019-2498

### SUMMARY OF THE INVENTION

### PROBLEMS TO BE SOLVED BY THE INVENTION

Nowadays, in the field of electric vehicles such as battery electric vehicles (EV) and hybrid electric vehicles (HEV), electric motors are rotated at a higher speed for a reduction in size and weight. A ball bearing supporting a rotary shaft to which rotation of such an electric motor is input is sometime used under the conditions that the dmn (ball pitch circle diameter dm(mm) X the number of rotations n (min-¹)) value exceeds 2 million.

The inventors of the present application considered using a grease-enclosed ball bearing as a bearing that supports a rotary shaft that rotates at a high speed, for example, a rotary shaft to which rotation of an electric motor of an electric vehicle is input. In a case where a grease-enclosed ball bearing supports a rotary shaft rotating at a high speed, it is necessary to increase a grease life in order to ensure a bearing life.

Specifically, with respect to a grease-enclosed ball bearing, the bearing life (grease life) during which lubrication failure does not occur due to deterioration of the grease enclosed in the bearing space is normally shorter than the bearing life (fatigue life) during which abnormality does not occur due to fatigue of bearing components. Therefore, when studying the bearing life of the grease-enclosed ball bearing, the grease life is dominant. Also, in a case where the bearing is used for high-speed rotation, the total number of rotations of the bearing increases compared to a case where the bearing is used for low-speed rotation, even if the use time is the same in both cases.

Therefore, if the grease-enclosed ball bearing is used as a bearing that supports a rotary shaft rotating at a high speed, increasing the grease life (i.e., increasing the total number of rotations of the bearing during the grease life) is required.

As a way to increase the grease life, it is considered to increase the enclosed amount of grease enclosed in the bearing space so as to be larger than usual. However, if the enclosed amount of grease is simply increased, this only causes grease to leak easily, and, as a result, it is impossible to increase the amount of grease that can be actually used, and to increase the grease life.

In view of the above, the inventors of the present application investigated a mechanism in which grease leakage occurs when the amount of grease enclosed in the bearing space is increased. As a result, the inventors of the present application discovered a mechanism of grease leakage in which, in a grease-enclosed ball bearing, when, due to rotation of the bearing, the grease on the surfaces of the balls is scraped off by the cage claws, and accumulates on the radially inner surfaces of the cage claws, and the grease accumulating on the radially inner surfaces of the cage claws increases, a portion of the grease moves to the radially inner surface of the cage circular annular portion, and when the grease accumulating on the radially inner surface of the cage circular annular portion increases, the grease overflowing from the radially inner surface of the cage circular annular portion reaches the contact or non-contact sealed portion between the seal member and the inner ring, and the grease reaching the sealed portion gradually leaks out of the bearing.

Then, the inventors of the present application obtained the idea that if, when the grease on the surfaces of the balls is scraped off by the cage claws, and accumulates on the radially surfaces of the cage claws, the grease accumulating on the radially inner surfaces of the cage claws can be prevented from moving to the radially inner surface of the cage circular annular portion, grease leakage does not occur even when the amount of grease enclosed in the bearing space is increased.

It is an object of the present invention to provide a grease-enclosed ball bearing in which grease leakage can be effectively prevented.

### MEANS FOR SOLVING THE PROBLEMS

The present invention is defined in independent claim 1. Preferred embodiments are laid down in the dependent claims. In order to achieve the above object, the present invention provides a grease-enclosed ball bearing comprising: an inner ring; an outer ring arranged radially outwardly of, and coaxially with, the inner ring; a plurality of balls disposed in an annular bearing space defined between the inner ring and the outer ring; an annular seal member disposed at one axial end of the bearing space; grease enclosed in the bearing space; and a cage retaining the balls, wherein the cage includes: a cage circular annular portion that circumferentially extends; and cage claws having a cantilevered structure, and axially extending from the cage circular annular portion so as to be located between respective circumferentially adjacent pairs of the balls, and wherein each of the cage claws has: pocket surfaces opposed to surfaces of corresponding ones of the balls, respectively; and a claw radially inner surface circumferentially extending from radially inner edges of the pocket surfaces so as to be opposed to an outer periphery of the inner ring, characterized in that the claw radially inner surface of each of the cage claws is provided with an inclination for guiding grease that is displaced radially outward from a root of the cage claw toward a distal end of the cage claw.

With this arrangement, due to the inclinations for guiding grease disposed on the claw radially inner surfaces and the centrifugal force acting on grease, it is possible to prevent the grease accumulating on the claw radially inner surfaces from moving to the radially inner surface of the cage circular annular portion. Therefore, the grease scraped off by the cage claws from the surfaces of the balls, and accumulating on the claw radially inner surfaces is prevented from reaching the seal member, and grease leakage can be effectively prevented.

According to the invention, the cage circular annular portion has, on a cross section passing through centers of the balls and orthogonal to a circumferential direction, pocket bottoms axially opposed to the respective balls; and a circular annular portion radially inner surface axially extending from radially inner ends of the pocket bottoms, and radially opposed to the outer periphery of the inner ring, and an inclination start positions of the inclination of the claw radially inner surface of each of the cage claws is a position where a corresponding one of the pocket bottoms and the circular annular portion radially inner surface intersect with each other.

With this arrangement, since the claw radially inner surface of each cage claw is inclined from, as the inclination start position, a position at which the pocket bottom and the circular annular portion radially inner surface intersect with each other (i.e., the position of the end of the cage claw on the side of its root), it is possible to particularly effectively prevent the grease scraped off from the surfaces of the balls by the cage claws from moving to the circular annular portion radially inner surface. That is, since, due to rotation of the bearing, the grease adhering to the inner periphery of the outer ring and the outer periphery of the inner ring is pushed away to both axial sides by the balls, the adhesion amount of the grease adhering to the surfaces of the balls is larger at the portions on both axial sides than at the portions in contact with the axial centers of the outer ring raceway surface and the inner ring raceway surface, and the amount of the grease scraped off from the surfaces of the balls by the cage claws is normally the largest at the positions of the ends of the cage claws on the sides of their roots. Since the claw radially inner surface of each cage claw is inclined from, as the inclination start position, the position of the end of the cage claw on the side of its root, the claw radially inner surface has an inclination for guiding grease, at the position where the amount of the grease scraped off by the cage claws is the largest. Therefore, it is possible to particularly effectively prevent the grease scraped off from the surfaces of the balls by the cage claws from moving to the circular annular portion radially inner surface.

It is preferable that the cage radially inner surface of each of the cage claws is entirely disposed radially outward of the circular annular portion radially inner surface.

With this arrangement, even if grease accumulates on any portion of the radially inner surface of each cage claw, the grease needs to move radially inward against the centrifugal force acting on the grease in order to move to the circular annular portion radially inner surface. Therefore, it is possible to effectively prevent the grease accumulating on the radially inner surfaces of the cage claws from moving to the circular annular portion radially inner surface. Also, if the entire radially inner surface of each cage claw is disposed radially outward of the circular annular portion radially inner surface, it is possible to reduce the volumes of the cage claws, and to increase the amount of grease enclosed in the bearing space accordingly.

It is preferable that the cage circular annular portion further has: a seal opposed surface axially opposed to the seal member; and a grease release tapered surface obliquely connecting the seal opposed surface and the circular annular portion radially inner surface together.

With this arrangement, the circular annular portion radially inner surface and the seal opposed surface of the cage circular annular portion are connected together via the oblique grease release tapered surface so as not to directly intersect with each other. Therefore, even if grease accumulates on the circular annular portion radially inner surface, and the grease axially moves toward the seal member along the circular annular portion radially inner surface, the grease moves radially outward along the grease release tapered surface by the centrifugal force acting on the grease. Therefore, it is possible to prevent the grease from reaching the sealed portion between the seal member and the inner ring.

According to the present invention, the cage circular annular portion further has a circular annular portion radially outer surface radially opposed to an inner periphery of the outer ring, and a radial gap between the outer periphery of the inner ring and the circular annular portion radially inner surface is larger than a radial gap between the inner periphery of the outer ring and the circular annular portion radially outer surface.

With this arrangement, since the radial gap between the outer periphery of the inner ring and the circular annular portion radially inner surface is large, even if grease accumulates on the circular annular portion radially inner surface, and the grease axially moves toward the seal member along the circular annular portion radially inner surface, the grease can be prevented from reaching the sealed portion between the seal member and the inner ring.

The circular annular portion radially inner surface is preferably formed with grease receiving recesses each axially extending through the cage circular annular portion at an intermediate position between a corresponding circumferentially adjacent pair of the balls.

With this arrangement, even if grease adheres to the circular annular portion radially inner surface, it is possible to prevent the grease from reaching the sealed portion between the seal member and the inner ring by introducing the grease into the grease receiving recesses.

Each of the cage claws is preferably formed with a grease passage groove radially extending through the cage claw at the intermediate position between the corresponding circumferentially adjacent pair of the balls, the grease passage groove having a depth that allows the grease passage groove to axially go into the cage claw from the distal end of the cage claw toward the root of the cage claw beyond a pitch circle connecting the centers of the balls.

With this arrangement, when, due to rotation of the bearing, the grease on the surfaces of the balls is scraped off by the cage claws, accumulates on the claw radially inner surfaces, and overflows from the claw radially inner surfaces, the overflowing grease moves radially outward through the grease passage grooves by a centrifugal force. Therefore, the grease in the interior of the bearing can be circulated without passing through the vicinity of the seal member, and the grease circulating in the interior of the bearing can be effectively prevented from reaching the sealed portion between the seal member and the inner ring. Also, it is possible to reduce the volumes of the cage claws due to formation of the grease passage grooves, and thus to increase the amount of grease enclosed in the bearing space.

It is preferable that axial lengths of the cage claws are longer than radii of the balls, and the claw radially inner surface of each of the cage claws has an inner diameter smaller than the pitch circle, which connects the centers of the balls, such that the radially inner edges of the pocket surfaces of the cage claw are located radially inward of the pitch circle.

With this arrangement, the balls are stably retained by the cage claws.

A chamfer having a size of 0.5 mm or more is preferably disposed at an edge where each of the pocket surfaces of each of the cage claws and the claw radially inner surface of the cage claw intersect with each other.

With this arrangement, it is possible to reduce grease scraping off action on the surfaces of the balls due to the cage claws. Also, it is possible to effectively lubricate the surfaces of the balls with the grease accumulating on the chamfers.

Each of the cage claws is preferably formed with grease grooves radially extending to cross the respective pocket surfaces of the cage claw.

With this arrangement, it is possible to effectively lubricate the surfaces of the balls with the grease accumulating on the grease grooves and the grease accumulating on the claw radially inner surfaces.

The cage can be formed of a resin composition in which a fiber-reinforced material is added to a resin material.

An enclosed amount of the grease enclosed is preferably set to 38% or more of a total space volume obtained by subtracting a volume of the cage and a volume of the balls from a volume of the bearing space.

With this arrangement, the enclosed amount of grease enclosed is larger than in a normal grease-enclosed ball bearing, and in addition, grease leakage is less likely to occur. Therefore, it is possible to increase the bearing life (grease life) during which lubrication failure does not occur due to grease deterioration or the like.

The enclosed amount of the grease enclosed is preferably set to 100% or more of a stationary space volume obtained by subtracting, from the volume of the bearing space, the volume of the cage and a volume of a passage region of the balls during rotation of the bearing.

With this arrangement, the enclosed amount of grease enclosed is larger than in a normal grease-enclosed ball bearing, and in addition, grease leakage is less likely to occur. Therefore, it is possible to increase the grease life.

### EFFECTS OF THE INVENTION

In the grease-enclosed ball bearing of the present invention, due to the inclinations for guiding grease disposed on the claw radially inner surfaces and the centrifugal force acting on grease, it is possible to prevent the grease accumulating on the claw radially inner surfaces from moving to the radially inner surface of the cage circular annular portion. Therefore, the grease scraped off by the cage claws from the surfaces of the balls, and accumulating on the claw radially inner surfaces is prevented from reaching the seal member, and grease leakage can be effectively prevented.

### BRIEF DESCRIPTION OF THE DRAWINGS

Fig. 1 is a sectional view of a grease-enclosed ball bearing according to a first embodiment of the present invention.
Fig. 2 is an enlarged sectional view illustrating a cage in Fig. 1 and the vicinity thereof.
Fig. 3 is a sectional view of the grease-enclosed ball bearing in Fig. 2 taken along a plane passing through the centers of balls and orthogonal to the axial direction.
Fig. 4 is a right-side view of the cage illustrated in Fig. 2.
Fig. 5 is a sectional view taken along line V-V in Fig. 4.
Fig. 6 is a perspective view of the cage in Fig. 1 when seen from the side of cage claws.
Fig. 7 is an enlarged perspective view of the cage illustrating a state of the grease accumulating on claw radially inner surfaces when the amount of the grease enclosed in the grease-enclosed ball bearing in Fig. 1 is reduced.
Fig. 8 is an enlarged perspective view of the cage illustrating a state of the grease accumulating on the claw radially inner surfaces of the grease-enclosed ball bearing in Fig. 1.
Fig. 9 is a view illustrating a second embodiment of the present invention, and corresponding to Fig. 4.
Fig. 10 is a sectional view taken along line X-X in Fig. 9.
Fig. 11 is an enlarged perspective view of a cage illustrated in Fig. 9 when seen from the radially inner side.
Fig. 12 is a perspective view of a cage of a grease-enclosed ball bearing according to a third embodiment of the present invention when seen from the radially inner side.
Fig. 13 is an enlarged perspective view illustrating a variation of the cage in Fig. 12 in which grease receiving recesses are disposed in the cage.
Fig. 14 is a perspective view of a cage of a grease-enclosed ball bearing according to a fourth embodiment of the present invention when seen from the radially inner side.
Fig. 15 is a sectional view of a cage of a grease-enclosed ball bearing according to a fifth embodiment of the present invention taken along a plane passing through the centers of balls and orthogonal to the axial direction.
Fig. 16 is a sectional view of a grease-enclosed ball bearing of a comparative example, the sectional view corresponding to Fig. 1.
Fig. 17 is an enlarged sectional view illustrating a cage in Fig. 16 and the vicinity thereof.
Fig. 18 is a sectional view of the grease-enclosed ball bearing in Fig. 17 taken along a plane passing through the centers of balls and orthogonal to the axial direction.
Fig. 19 is an enlarged perspective view of the cage illustrating a state of the grease accumulating on claw radially inner surfaces of the grease-enclosed ball bearing in Fig. 16.
Fig. 20 is an enlarged perspective view of the cage illustrating a state of the grease accumulating on the claw radially inner surfaces when the amount of the grease enclosed in the grease-enclosed ball bearing in Fig. 16 is increased.
Fig. 21 is a view illustrating analysis results of the amount of radial displacement due to deflection of a cage claw caused when the grease-enclosed ball bearing in Fig. 16 is rotated at a high speed.
Fig. 22 is a view illustrating analysis results of the amount of radial displacement due to deflection of a cage claw caused when the grease-enclosed ball bearing in Fig. 1 is rotated at a high speed.

### BEST MODE FOR CARRYING OUT THE INVENTION

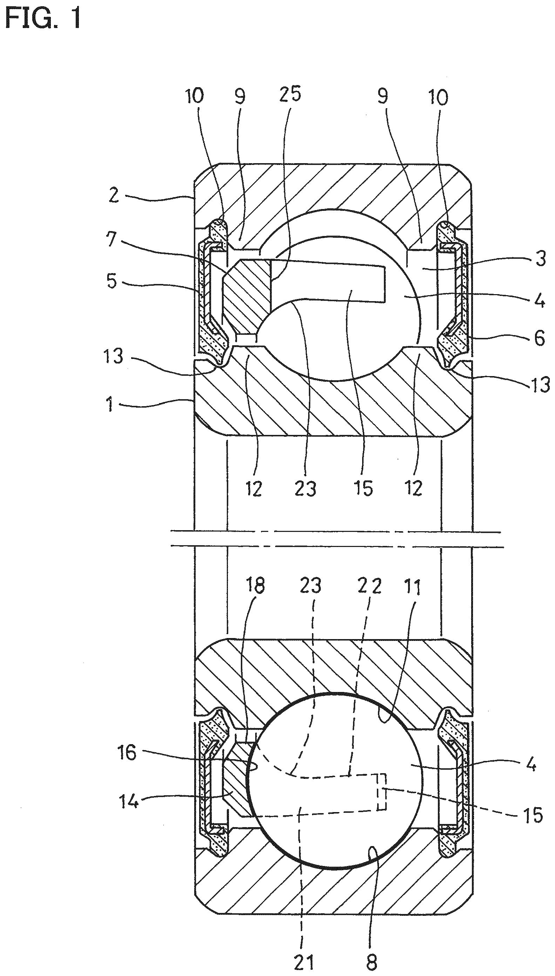

Fig. 1 illustrates a grease-enclosed ball bearing according to a first embodiment of the present invention. The grease-enclosed ball bearing includes an inner ring 1; an outer ring 2 arranged radially outward of and coaxially with the inner ring 1; a plurality of balls 4 disposed in an annular bearing space 3 defined between the inner ring 1 and the outer ring 2 so as to be circumferentially spaced apart from each other; an annular seal member 5 disposed at one (left end in the drawing) of the axal ends of the bearing space 3 on both axial sides; an annular seal member 6 disposed at the other axial end (right end in the drawing) of the bearing space 3; and a cage 7 that keeps the circumferential intervals between the balls 4.

The outer ring 2 has, in its inner periphery, an outer ring raceway groove 8 with which the balls 4 come into rolling contact; a pair of outer ring groove shoulders 9 located axially outward of the outer ring raceway groove 8; and a pair of seal fixing grooves 10 located axially outward of the respective outer ring groove shoulders 9. The outer ring raceway groove 8 circumferentially extends at the axial center of the inner periphery of the outer ring 2. The pair of outer ring groove shoulders 9 are bank-shaped portions circumferentially extending on both axial sides of the outer ring raceway groove 8. The seal fixing grooves 10 are circumferentially extending grooves formed axially outward of the respective outer ring groove shoulders 9 so as to be adjacent to the respective outer ring groove shoulders 9. The seal members 5 and 6 are fixedly fitted in the respective seal fixing grooves 10.

The inner ring 1 has, in its outer periphery, an inner ring raceway groove 11 with which the balls 4 come into rolling contact; a pair of inner ring groove shoulders 12 located axially outward of the inner ring raceway groove 11; and a pair of sliding recesses 13 located axially outward of the respective inner ring groove shoulders 12. The inner ring raceway groove 11 circumferentially extends at the axial center of the outer periphery of the inner ring 1. The pair of inner ring groove shoulders 12 are bank-shaped portions circumferentially extending on both axial sides of the inner ring raceway groove 11. The sliding recesses 13 are circumferentially extending recesses formed axially outward of the respective inner ring groove shoulders 12 so as to be adjacent to the respective inner ring groove shoulders 12. Seal lips of the seal members 5 and 6 on the inner peripheries thereof are in sliding contact with the respective sliding recesses 13.

As the seal members 5 and 6, contact-type seal members are exemplified in which the sealing lips of the seal members 5 and 6 on the inner peripheries thereof are in sliding contact with the respective sliding recesses 13, but non-contact type seal members may be used in which labyrinth gaps are defined between the sliding recesses 13 and the respective sealing lips of the seal members 5 and 6 on the inner peripheries thereof. The labyrinth gaps are minute gaps that can prevent entry of foreign matter, and that have, e.g., a width dimension of 0.5 mm or less.

The balls 4 are radially sandwiched between the outer ring raceway groove 8 and the inner ring raceway groove 11. The ball bearing with the seals is a deep-groove ball bearing. That is, the outer ring raceway groove 8 is a circular arc-shaped groove having a concave circular arc-shaped cross section symmetrical in the axial direction, and the inner ring raceway groove 11 is also a circular arc-shaped groove having a concave circular arc-shaped cross section symmetrical in the axial direction. The circular arc radius of the cross section of the outer ring raceway groove 8 is slightly larger than the radius of each ball 4. The circular arc radius of the cross section of the inner ring raceway groove 11 is also slightly larger than the radius of each ball 4.

The cage 7 is so-called a crown-type cage including a cage circular annular portion 14 circumferentially extending in a region axially sandwiched between a region through which the balls 4 pass and the seal member 5; and cage claws 15 each axially extending from the cage circular annular portion 14 so as to be located between the circumferentially adjacent pair of balls 4. The cage circular annular portion 14 and the cage claws 15 are formed as a seamless integral member made of a resin composition in which a fiber-reinforced material is added to a resin material.

As the resin material of the resin composition as its base, it is possible to use polyamide (PA) or super engineering plastic. As the polyamide, it is possible to use polyamide 46 (PA46), polyamide 66 (PA66), polynonamethylene terephthalamide (PA9T), or the like. As the super engineering plastic, it is possible to use polyether ether ketone (PEEK) or polyphenylene sulfide (PPS). As the fiber-reinforced material added to the resin material, it is possible to use glass fiber, carbon fiber, aramid fiber, or the like.

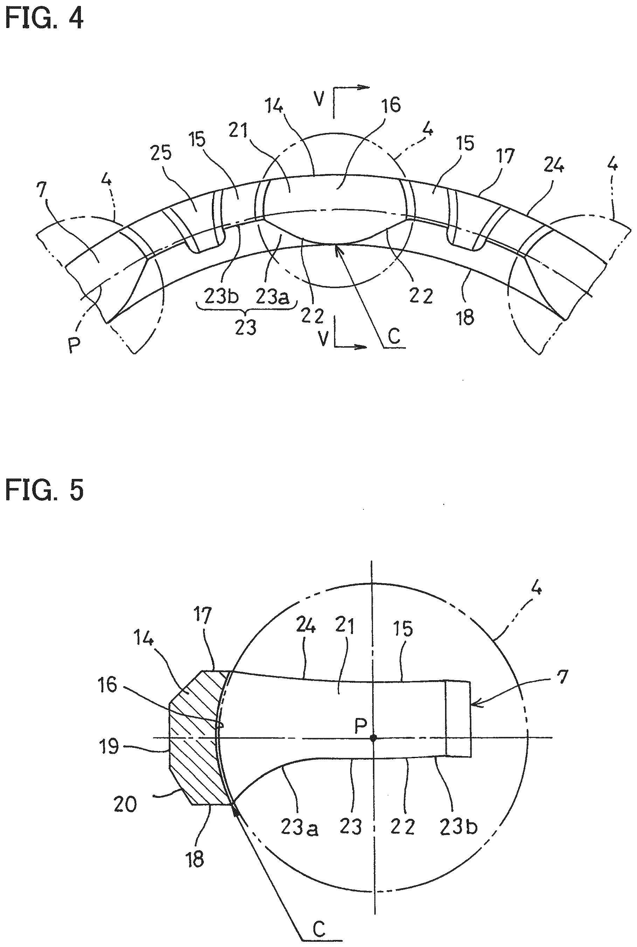

As illustrated in Fig. 5, the cage circular annular portion 14 has, on a cross section passing through the centers of the balls 4 and orthogonal to the circumferential direction, pocket bottoms 16 axially opposed to the respective balls 4; a circular annular portion radially outer surface 17 axially extending from the radially outer ends of the pocket bottoms 16; a circular annular portion radially inner surface 18 axially extending from the radially inner ends of the pocket bottoms 16; a seal opposed surface 19 axially opposed to the seal member 5 (see Fig. 1); and a grease release tapered surface 20 for grease release obliquely connecting the seal opposed surface 19 and the circular annular portion radially inner surface 18 together.

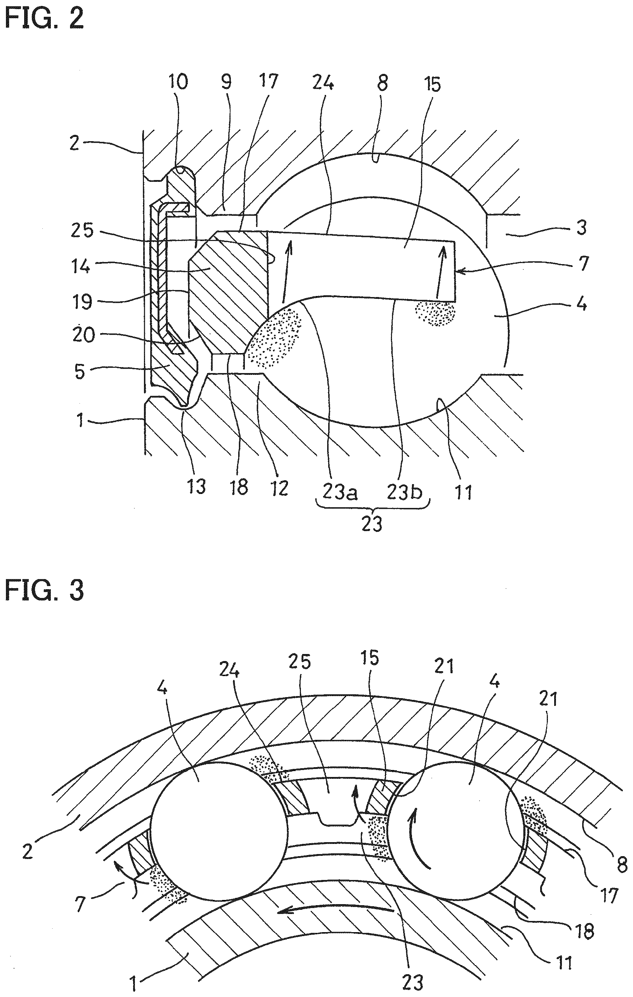

As illustrated in Fig. 2, the circular annular portion radially outer surface 17 is a cylindrical radially outer surface circumferentially extending at a position radially opposed to one of the outer ring groove shoulders 9 of the outer ring 2 on the inner periphery thereof. The circular annular portion radially inner surface 18 is a cylindrical radially inner surface circumferentially extending at a position radially opposed to one of the inner ring groove shoulders 12 of the inner ring 1 on the outer periphery thereof. The seal opposed surface 19 is a circular annular surface orthogonal to the axial direction, and circumferentially extending at a position axially opposed to the seal member 5. The radial gap between the outer periphery of the inner ring 1 and the circular annular portion radially inner surface 18 is larger than the radial gap between the inner periphery of the outer ring 2 and the circular annular portion radially outer surface 17.

As illustrated in Fig. 5, each cage claw 15 has a cantilevered structure having one axial end as a fixed end (root of the cage claw 15) fixed to the cage circular annular portion 14 and the other axial end as a free end (distal end of the cage claw 15). The cage claw 15 has an axial length longer than the radius of the ball 4 so as to extend to the side remote from the cage circular annular portion 14 beyond a pitch circle P connecting the centers of the plurality of balls 4.

As illustrated in Figs. 4 and 5, each cage claw 15 includes pocket surfaces 21 circumferentially opposed to the surfaces of the corresponding balls 4; a claw radially inner surface 23 circumferentially extending from the radially inner edges 22 of the pocket surfaces 21; and a claw radially outer surface 24 circumferentially extending from the radially outer edges of the pocket surfaces 21. Each pocket surface 21 has a concave spherical surface shape along the surface of the ball 4. As illustrated in Fig. 5, the end of the pocket surface 21 closer to the cage circular annular portion 14 is connected to the pocket bottom 16 of the cage circular annular portion 14. As illustrated in Fig. 2, the claw radially inner surface 23 is radially opposed to the inner ring raceway groove 11 and the inner ring groove shoulder 12 of the inner ring 1 on the outer periphery thereof.

As illustrated in Fig. 5, the claw radially inner surface 23 is constituted by an inclined radially inner surface portion 23a formed at the end of the cage claw 15 on the side of its root; and a non-inclined radially inner surface portion 23b connected to the side of the inclined radially inner surface portion 23a closer to the distal end of the cage claw 15. The inclined radially inner surface portion 23a is inclined to be displaced radially outward from the root of the cage claw 15 (side close to the cage circular annular portion 14) toward the distal end of the cage claw 15 (side remote from the cage circular annular portion 14). The inclined radially inner surface portion 23a may be a conical surface having a constant inclination along the axial direction, but in this embodiment, a funnel-shaped surface is used of which the inclination gradually increases toward the cage circular annular portion 14 along the axial direction.

With respect to the inclination of the inclined radially inner surface portion 23a, the inclination start position thereof is a position C at which the pocket bottom 16 and the circular annular portion radially inner surface 18 intersect with each other, so that the entire radially inner surface of the cage claw 15 is disposed radially outward of the circular annular portion radially inner surface 18. The non-inclined radially inner surface portion 23b is a cylindrical surface or a flat surface of which the radial position is constant, and does not change along the axial direction. The inclined radially inner surface portion 23a and the non-inclined radially inner surface portion 23b are connected to each other at a position axially close to the cage circular annular portion 14 beyond the position of the pitch circle P. The inner diameter of the claw radially inner surface 23 (inner diameter of the non-inclined radially inner surface portion 23b in the drawing) is smaller than the pitch circle P so that the radially inner edges 22 of the pocket surfaces 21 are located radially inward of the pitch circle P.

The claw radially outer surface 24 is a cylindrical surface of which the radial position is constant, and does not change along the axial direction. The outer diameter of the claw radially outer surface 24 is larger than the pitch circle P.

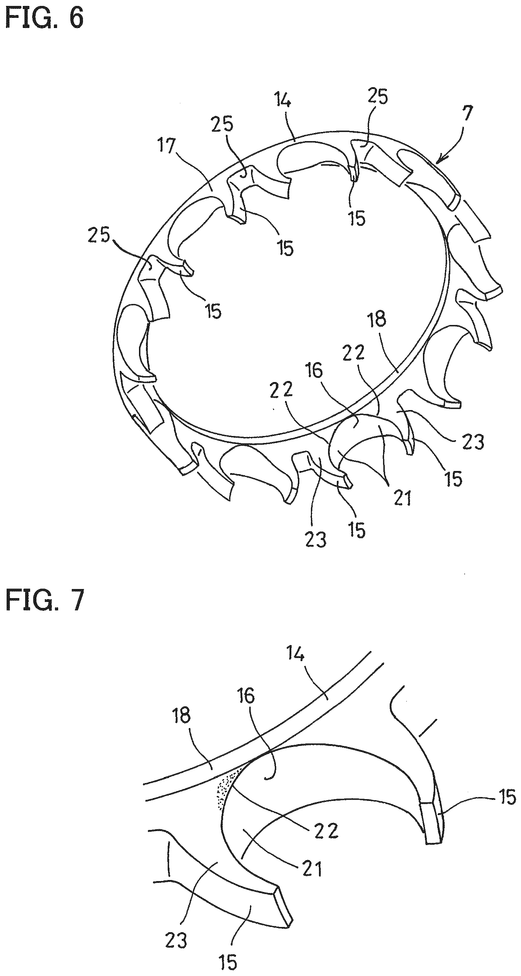

As illustrated in Figs. 3 and 6, each cage claw 15 has a grease passage groove 25 radially extending through the cage claw 15 at the intermediate position between the circumferentially adjacent pair of balls 4. As illustrated in Fig. 2, the grease passage groove 25 has a depth that allows the grease passage groove 25 to axially go into the cage claw 15 from the distal end of the cage claw 15 toward the root of the cage claw 15 beyond the pitch circle P (see Fig. 5).

Grease is enclosed in the annular bearing space 3 illustrated in Fig. 1, which is defined by the inner ring 1 and the outer ring 2 and the seal members 5 and 6 on both axial sides. The grease is a lubricant containing a base oil such as a synthetic oil (synthetic hydrocarbon) or a mineral oil (refined from petroleum); and a thickener dispersed in the base oil so as to make the base oil into a semi-solid state. The base oil preferably has a kinematic viscosity of 45 to 50 mm²/s. If the base oil has a kinematic viscosity of 50 mm²/s or less, the grease is soft, and rotational torque of the ball bearing can be effectively reduced. Also, if the base oil has a kinematic viscosity of 45 mm²/s or more, it is possible to reduce scattering of the grease in the interior of the bearing during high-speed rotation, and thus to effectively reduce grease leakage from the bearing.

In the grease-enclosed ball bearing of this embodiment, the enclosed amount of grease enclosed is set to 38% or more of a total space volume obtained by subtracting the volume of the cage 7 and the volume of the plurality of balls 4 from the volume of the bearing space 3. Also, the enclosed amount of grease enclosed is set to 100% or more of a stationary space volume obtained by subtracting, from the volume of the bearing space 3, the volumes of the cage 7 and the passage region of the balls 4 during rotation of the bearing.

In the grease-enclosed ball bearing of this embodiment, as illustrated in Figs. 2 and 5, since, at each cage claw 15, the claw radially inner surface 23 is provided with an inclination for guiding grease that is displaced radially outward from the root of the cage claw 15 toward the distal end of the cage claw 15, it is possible to effectively prevent grease leakage even in a state where the enclosed amount of grease enclosed in the bearing space 3 is large.

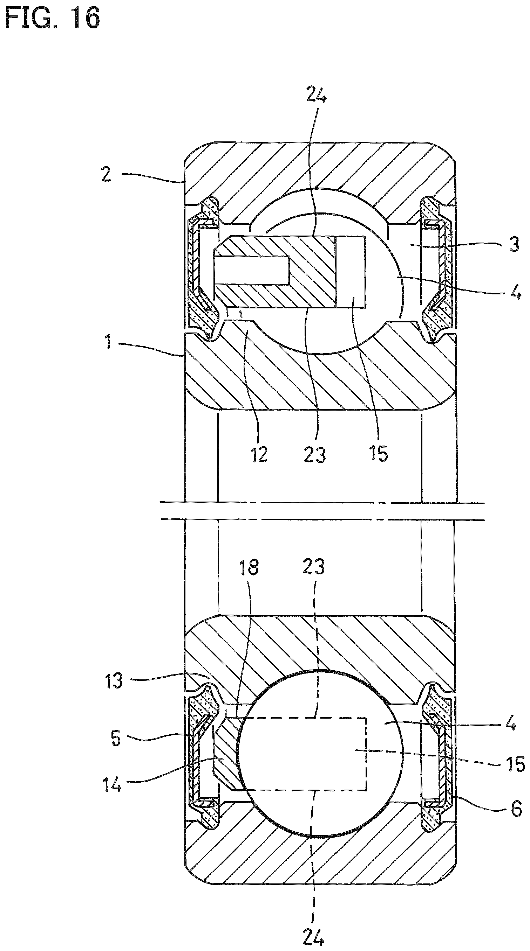

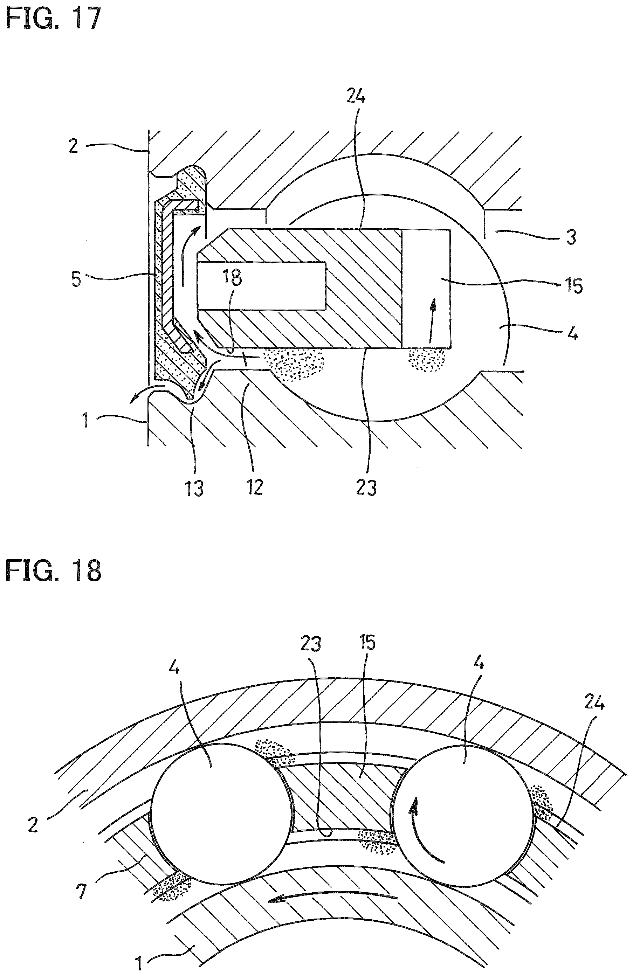

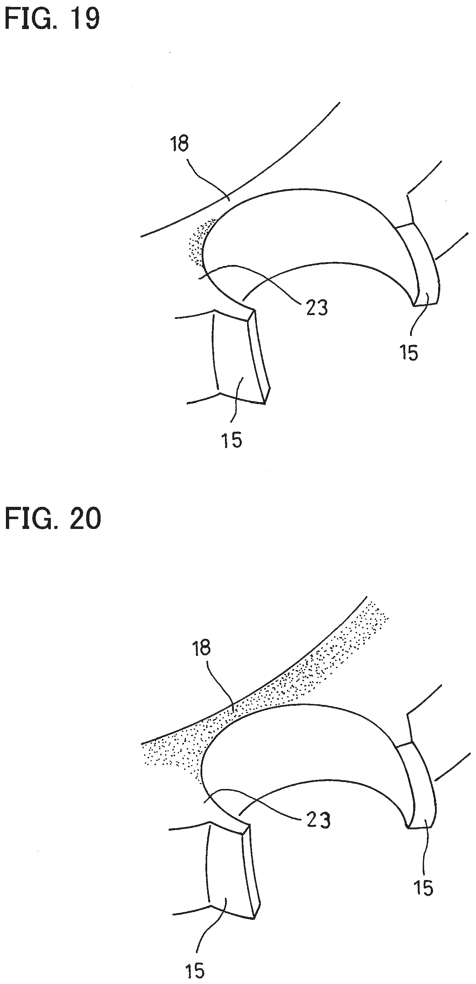

That is, a comparative example is now assumed in which, as illustrated in Figs. 16 to 18, the claw radially inner surfaces 23 are not inclined, and the radial positions of the claw radially inner surfaces 23 are constant and do not change along the axial direction. In this case, as illustrated in Fig. 18, due to rotation of the bearing, the grease on the surfaces of the balls 4 is scraped off by the cage claws 15, and accumulates on the claw radially inner surfaces 23 and the claw radially outer surfaces 24. In a normal grease-enclosed ball bearing, since the enclosed amount of grease enclosed in the bearing space 3 is relatively small, as illustrated in Fig. 19, the grease scraped off by the cage claws 15 remains there, and does not normally move to the circular annular portion radially inner surface 18. However, when the enclosed amount of grease enclosed in the bearing space 3 is increased, the grease scraped off by the cage claws 15 and accumulating on the claw radially inner surfaces 23 increases as illustrated in Fig. 17, and a portion of the grease moves to the circular annular portion radially inner surface 18. When the grease accumulating on the circular annular portion radially inner surface 18 increases, the grease overflowing from the circular annular portion radially inner surface 18 reaches the sealed portion between the seal member 5 and the inner ring 1 (sliding contact portion between the seal lip of the seal member 5 on the inner periphery thereof and one of the sliding recesses 13 of the inner ring 1 in the outer periphery thereof), and the grease reaching this sealed portion could gradually leak out of the bearing. At this time, as illustrated in Fig. 17, when the grease accumulating on the circular annular portion radially inner surface 18 comes into contact with one of the inner ring groove shoulders 12, the grease adheres to the entire circular annular portion radially inner surface 18 as illustrated in Fig. 20.

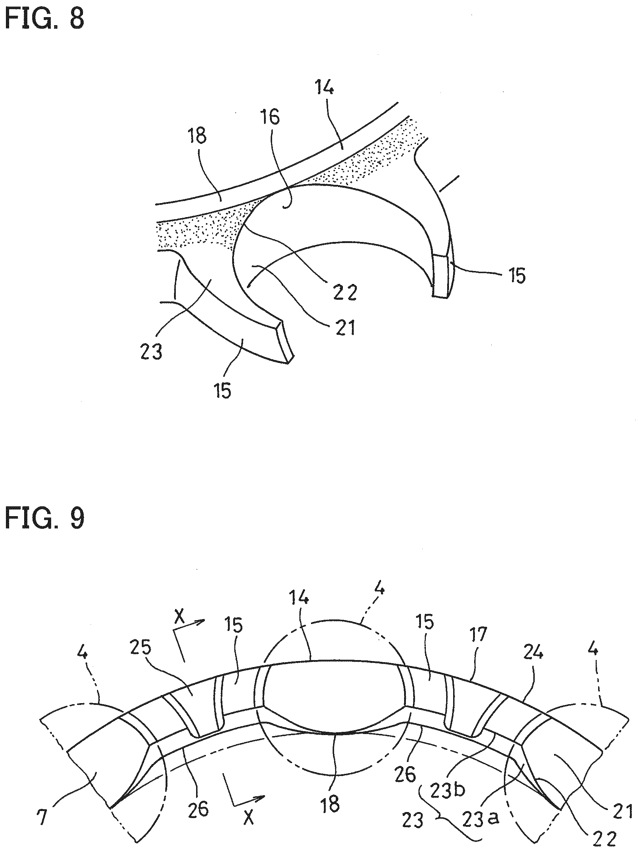

In contrast thereto, in the grease-enclosed ball bearing of the above embodiment, as illustrated in Figs. 2 and 5, the claw radially inner surface 23 of each cage claw 15 is provided with an inclination for guiding grease that is displaced radially outward from the root of the cage claw 15 toward the distal end of the cage claw 15. Therefore, when, as illustrated in Fig. 3, due to rotation of the bearing, the grease on the surfaces of the balls 4 is scraped off by the cage claws 15, and accumulates on the claw radially inner surfaces 23, as illustrated in Fig. 2, the grease accumulating on the claw radially inner surfaces 23 receives forces from roots of the cage claws 15 toward the distal ends of the cage claws 15 due to the inclinations for guiding grease provided on the claw radially inner surfaces 23 and the centrifugal force acting on the grease. Therefore, the grease scraped off from the surfaces of the balls 4 by the cage claws 15, and accumulating on the claw radially inner surfaces 23 is prevented from moving to the circular annular portion radially inner surface 18, and reaching the seal member 5, and grease leakage can be effectively prevented. At this time, the grease accumulating on the claw radially inner surfaces 23 is blocked by the inclined radially inner surface portions 23a of the claw radially inner surfaces 23 as illustrated in Fig. 8. Fig. 7 illustrates the state of the grease scraped off by the cage claws 15, and accumulating on the claw radially inner surfaces 23 in a case where the enclosed amount of grease enclosed in the grease-enclosed ball bearing of the above embodiment is reduced.

Also, in the grease-enclosed ball bearing of this embodiment, since, as illustrated in Fig. 5, the claw radially inner surface 23 of each cage claw 15 is inclined from, as the inclination start position, a position C at which the pocket bottom 16 and the circular annular portion radially inner surface 18 intersect with each other (i.e., the position of the end of the cage claw 15 on the side of its root), it is possible to particularly effectively prevent the grease scraped off from the surfaces of the balls 4 by the cage claws 15 from moving to the circular annular portion radially inner surface 18.

That is, since the grease adhering to the outer ring raceway groove 8 and the inner ring raceway groove 11 illustrated in Fig. 2 is pushed away to both axial sides by the balls 4, the adhesion amount of the grease adhering to the surfaces of the balls 4 is larger at the portions on both axial sides than at the portions in contact with the axial centers of the outer ring raceway groove 8 and the inner ring raceway groove 11, and the amount of the grease scraped off from the surfaces of the balls 4 by the cage claws 15 is normally the largest at the positions of the ends of the cage claws 15 on the sides of their roots. Since, as illustrated in Fig. 5, the claw radially inner surface 23 of each cage claw 15 is inclined from, as the inclination start position, the position C of the end of the cage claw 15 on the side of its root, the claw radially inner surface 23 has an inclination for guiding grease, at the position where the amount of the grease scraped off by the cage claws 15 is the largest. Therefore, it is possible to particularly effectively prevent the grease scraped off from the surfaces of the balls 4 by the cage claws 15 from moving to the circular annular portion radially inner surface 18.

Also, in the grease-enclosed ball bearing of this embodiment, as illustrated in Figs. 2 and 5, the entire radially inner surface of each cage claw 15 is disposed radially outward of the circular annular portion radially inner surface 18. Therefore, even if grease accumulates on any portion of the radially inner surface of the cage claw 15, the grease needs to move radially inward against the centrifugal force acting on the grease in order to move to the circular annular portion radially inner surface 18. Therefore, it is possible to effectively prevent the grease accumulating on the radially inner surfaces of the cage claws 15 from moving to the circular annular portion radially inner surface 18.

Also, in the grease-enclosed ball bearing of this embodiment, as illustrated in Fig. 2, the entire radially inner surface of each cage claw 15 is disposed radially outward of the circular annular portion radially inner surface 18. Therefore, compared to a comparative example in which, as illustrated in Fig. 17, the radially inner surfaces of the cage claws 15 are disposed at the same radial position as the circular annular portion radially inner surface 18, it is possible to reduce the volumes of the cage claws 15, and to increase the amount of grease enclosed in the bearing space 3 accordingly.

Also, in the grease-enclosed ball bearing of this embodiment, as illustrated in Fig. 2, the circular annular portion radially inner surface 18 and the seal opposed surface 19 of the cage circular annular portion 14 are connected together via the oblique grease release tapered surface 20 so as not to directly intersect with each other. Therefore, even if grease accumulates on the circular annular portion radially inner surface 18, and the grease axially moves toward the seal member 5 along the circular annular portion radially inner surface 18, the grease moves radially outward along the grease release tapered surface 20 by the centrifugal force acting on the grease. Therefore, it is possible to prevent the grease from reaching the sealed portion between the seal member 5 and the inner ring 1.

Also, in the grease-enclosed ball bearing of this embodiment, as illustrated in Fig. 2, the radial gap between the outer periphery of the inner ring 1 and the circular annular portion radially inner surface 18 is large. Therefore, even if grease accumulates on the circular annular portion radially inner surface 18, and the grease axially moves toward the seal member 5 along the circular annular portion radially inner surface 18, the grease can be prevented from reaching the sealed portion between the seal member 5 and the inner ring 1.

Also, as illustrated in Figs. 2 and 3, the grease-enclosed ball bearing of this embodiment has grease passage grooves 25 radially extending through the respective cage claws 15. Therefore, when the grease on the surfaces of the balls 4 is scraped off by the cage claws 15, accumulates on the claw radially inner surfaces 23, and overflows from the claw radially inner surfaces 23, the overflowing grease moves radially outward through the grease passage grooves 25 by a centrifugal force. Therefore, the grease in the interior of the bearing can be circulated without passing through the vicinity of the seal member 5, and the grease circulating in the interior of the bearing can be effectively prevented from reaching the sealed portion between the seal member 5 and the inner ring 1.

Also, in the grease-enclosed ball bearing of this embodiment, since each grease passage groove 25 has a depth that allows the grease passage groove 25 to axially go into the cage claw 15 from the distal end of the cage claw 15 toward the root of the cage claw 15 beyond the pitch circle P, compared to the comparative example shown in Fig. 17, it is possible to reduce the volumes of the cage claws 15 due to formation of the grease passage grooves 25, and to increase the amount of grease enclosed in the bearing space 3.

Also, in the grease-enclosed ball bearing of this embodiment, as illustrated in Fig. 5, each cage claw 15 has an axial length longer than the radius of the ball 4, and the non-inclined radially inner surface portion 23b of the claw radially inner surface 23 of the cage claw 15 has an inner diameter smaller than the pitch circle P. Therefore, the cage claws 15 stably retain the balls 4 compared to a case where the inner diameter of the non-inclined radially inner surface portion 23b of the claw radially inner surface 23 of each cage claw is larger than the pitch circle P.

Also, in the grease-enclosed ball bearing of this embodiment, the enclosed amount of grease enclosed is larger than in a normal grease-enclosed ball bearing, and in addition, grease leakage is less likely to occur. Therefore, it is possible to increase the bearing life (grease life) during which lubrication failure does not occur due to grease deterioration or the like. Therefore, it is possible to suitably use this grease-enclosed ball bearing as a bearing that supports a rotary shaft that rotates at a high speed, for example, a rotary shaft to which rotation of an electric motor of an electric vehicle is input, or a rotary shaft of a hybrid electric vehicle that uses an electric motor for an auxiliary driving force for the engine. Specifically, this grease-enclosed ball bearing is particularly suitable for use as a ball bearing for high-speed rotation that rotates in a high-speed rotation range in which the dmn value (pitch circle diameter dm (mm) of the balls 4 × the number of rotations n (min⁻¹)) is one million or more.

Also, in the grease-enclosed ball bearing of this embodiment, the portion of each cage claw 15 on the side of its distal end has a radial thickness smaller than that of the portion of the cage claw 15 on the side of its root. Therefore, it is possible to reduce radial deflection of the cage claw 15 generated when receiving a centrifugal force. Therefore, during high-speed rotation of the bearing, it is possible to reduce a change in the sizes of the gaps between the pocket surfaces 21 of the cage claws 15 and the surfaces of the balls 4 due to deflection of the cage claws 15.

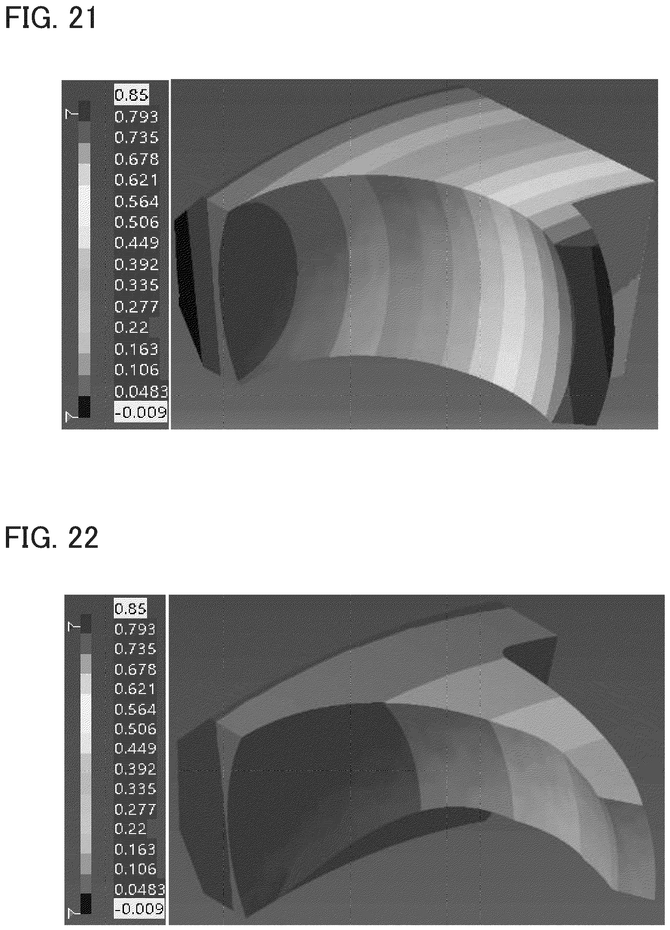

Figs. 21 and 22 each shows analysis results of the amount of radial displacement caused by deflection of the cage claw 15 while the bearing is rotating at a high speed, under the condition that the resin compositions constituting the cage claws 15 of Figs. 21 and 22 are the same. With respect to Fig. 21, as the grease-enclosed ball bearing of the comparative example shown in Fig. 16, an analysis model was prepared in which the outer ring 2 has an outer diameter of 62 mm and the inner ring 1 has an inner diameter of 30 mm, and analysis was performed on the amount of radial displacement of each portion of the cage claw 15 due to deflection in the case where the inner ring 1 of the analysis model was rotated at 20,000 rpm. With respect to Fig. 22, as the grease-enclosed ball bearing of the first embodiment shown in Fig. 1, an analysis model was prepared in which the outer ring 2 has an outer diameter of 62 mm and the inner ring 1 has an inner diameter of 30 mm, and analysis was performed on the amount of radial displacement of each portion of the cage claw 15 due to deflection in the case where the inner ring 1 of the analysis model was rotated at 20,000 rpm. When comparing Figs. 21 and 22, the following was confirmed. With respect to the comparative example shown in Fig. 21, the distal end of the cage claw 15 was radially displaced by about 0.8 mm due to deflection of the cage claw 15 caused by a centrifugal force. In contrast thereto, with respect to the first embodiment shown in Fig. 22, the radial displacement of the distal end of the cage claw 15 was reduced to less than 0.4 mm (about 1/2 of the comparative example). Also, analysis was performed using the same analysis models also in the case where the inner ring 1 was rotated at 30,000 rpm, and, as a result, the following was confirmed. With respect to the analysis model of the comparative example shown in Fig.21, the distal end of the cage claw 15 was radially displaced by about 1.7 mm. In contrast thereto, with respect to the analysis model of the first embodiment shown in Fig. 22, the radial displacement of the distal end of the cage claw 15 was reduced to about 0.7 mm.

Figs. 9 to 11 illustrate a second embodiment of the present invention. The second embodiment is different from the first embodiment in that in the first embodiment, the circular annular portion radially inner surface 18 is a cylindrical surface of which the radial position does not change around the entire circumference, whereas in the second embedment, grease receiving recesses 26 are formed in the circular annular portion radially inner surface 18, but the second embodiment is the same as the first embodiment in the other structures. Therefore, the elements of the second embodiment corresponding to those of the first embodiment are hereinafter denoted by the same reference numerals, and the description thereof is omitted.

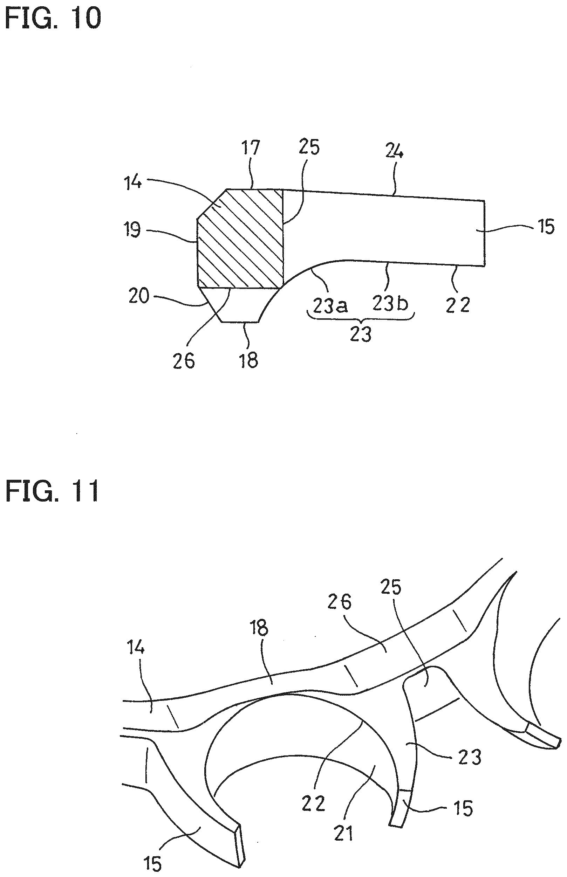

As illustrated in Figs. 9 and 11, the circular annular portion radially inner surface 18 has grease receiving recesses 26 each axially extending through the cage circular annular portion at the intermediate position between the circumferentially adjacent pair of balls 4. Each grease receiving recess 26 is shaped to gradually become shallow from the intermediate position between the circumferentially adjacent pair of balls 4 toward both circumferential sides.

As illustrated in Fig. 10, each grease receiving recess 26 is formed such that the radial position of the inner surface of the grease receiving recess 26 does not axially change. The grease receiving recess 26 is formed to axially extend through the cage circular annular portion 14, and partially enter the end of the cage claw 15 close to the cage circular annular portion 14. The inclination of each claw radially inner surface 23 has the same structure as the inclination thereof in the first embodiment.

In the grease-enclosed ball bearing of this embodiment, since, as illustrated in Fig. 10, the grease receiving recesses 26 are formed in the circular annular portion radially inner surface 18, even if grease accumulates on the circular annular portion radially inner surface 18, it is possible to prevent the grease from reaching the sealed portion between the seal member 5 and the inner ring 1 illustrated in Fig. 2 by introducing the grease into the grease receiving recesses 26.

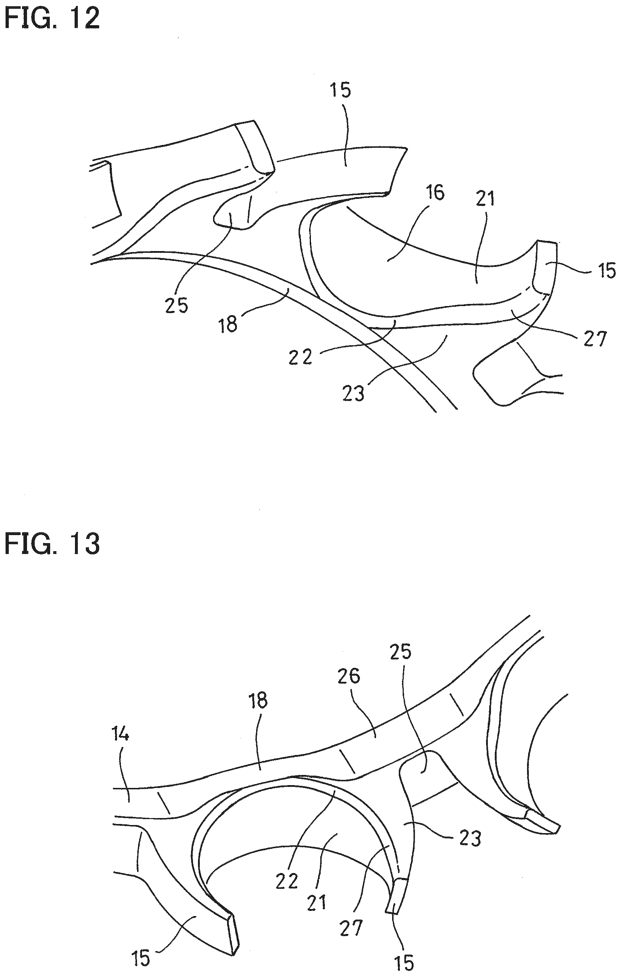

Fig. 12 illustrates a third embodiment of the present invention. The third embodiment is different from the first embodiment in that in the first embodiment, as illustrated in Fig. 8, each pocket surface 21 and the claw radially inner surface 23 intersect with each other so as to form a sharp corner, whereas in the third embodiment, a chamfer 27 is disposed at the edge where each pocket surface 21 and the claw radially inner surface 23 intersect with each other, but the third embodiment is the same as the first embodiment in the other structures.

A chamfer 27 having a size of 0.5 mm or more is disposed at the edge where each pocket surface 21 and the claw radially inner surface 23 intersect with each other. In the shown example, the chamfer 27 is a rounded chamfer having a circular arc-shaped cross section having a radius of 0.5 mm or more. As the chamfer 27, a flat chamfer may be used which has a cross section in which the pocket surface 21 and the claw radially inner surface 23 are removed by a width of 0.5 mm or more along the respective surface directions of the pocket surface 21 and the claw radially inner surface 23, and an oblique straight portion is formed to connect these surfaces together.

In the grease-enclosed ball bearing of this embodiment, a chamfer 27 having a size of 0.5 mm or more is disposed at the edge where each pocket surface 21 and the claw radially inner surface 23 intersect with each other, it is possible to reduce grease scraping off action on the surfaces of the balls 4 due to the cage claws 15. Also, it is possible to effectively lubricate the surfaces of the balls 4 with the grease accumulating on the chamfers 27.

As illustrated in Fig. 13, grease receiving recesses 26 as used in the second embodiment may be additionally formed.

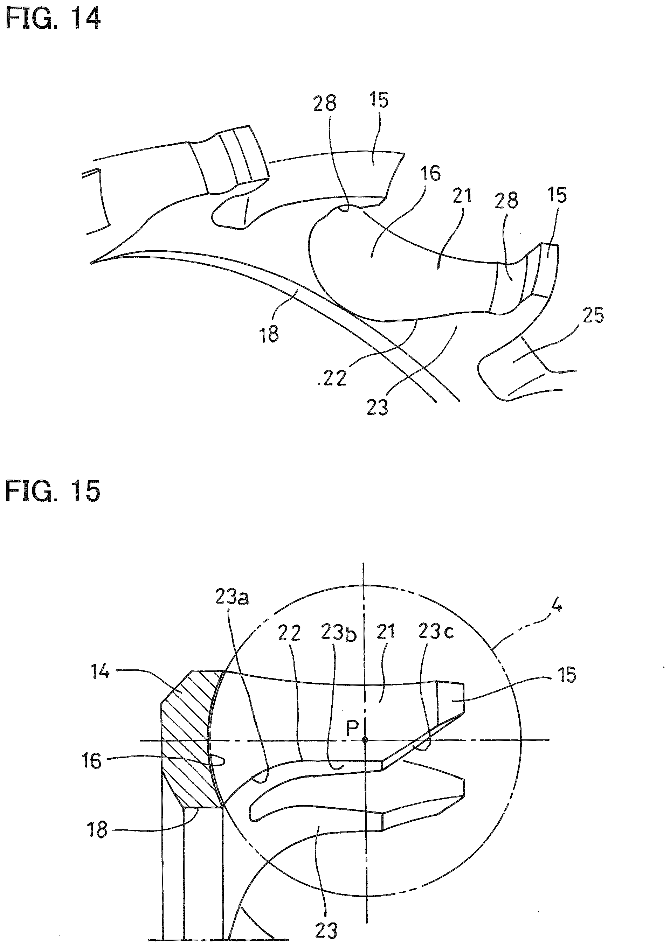

Fig. 14 illustrates a fourth embodiment of the present invention. In Fig. 14, each cage claw 15 is formed with grease grooves 28 radially extending to cross the respective pocket surfaces 21. Each grease groove 28 is formed at the position where the grease groove 28 intersects with the pitch circle P (see Fig. 5) of the balls 4. By forming the grease grooves 28, it is possible to effectively lubricate the surfaces of the balls 4 with the grease accumulating on the grease grooves 28 and the grease accumulating on the claw radially inner surfaces 23.

Fig. 15 illustrates a fifth embodiment of the present invention. In Fig. 15, the claw radially inner surface 23 of each cage claw 15 is constituted by an inclined radially inner surface portion 23a formed at the end of the cage claw 15 on the side of its root; a non-inclined radially inner surface portion 23b connected to the side of the inclined radially inner surface portion 23a closer to the distal end of the cage claw 15; and a distal end inclined surface portion 23c connected to the side of the non-inclined radially inner surface portion 23b closer to the distal end of the cage claw 15. The distal end of the distal end inclined surface portion 23c is located radially outward of the pitch circle P, whereas the non-inclined radially inner surface portion 23b is located radially inward of the pitch circle P. Also, even if this structure is used, as in the first embodiment, the inner diameter of the non-inclined radially inner surface portion 23b of the claw radially inner surface 23 is smaller than the pitch circle P such that the radially inner edges 22 of the pocket surfaces 21 are located radially inward of the pitch circle P. Therefore, the balls 4 are stably retained by the cage claws 15.

While, in each of the above embodiments, a hollow annular member having an inner ring raceway groove 11 in the outer periphery is exemplified and described as the inner ring 1, the inner ring 1 does not necessarily need to be a hollow annular member. For example, a solid member (shaft body) having an inner ring raceway groove 11 which is directly formed in the outer periphery, and with which the balls 4 come into rolling contact may be used as the inner ring 1. In short, an inner member having, in the outer periphery, an annular inner ring raceway groove with which the balls come into rolling contact can be used as the inner ring.

While, in each of the above embodiments, a hollow annular member having an outer ring raceway groove 8 in the inner periphery is exemplified and described as the outer ring 2, the outer ring 2 does not necessarily need to be a hollow annular member. For example, a bearing housing having an outer ring raceway groove 8 which is directly formed in the inner periphery, and with which the balls 4 come into rolling contact may be used as the outer ring 2. In short, an outer member having, in the inner periphery, an annular outer ring raceway groove with which the balls come into rolling contact can be used as the outer ring.

The above-described embodiments are mere examples in every respect, and the present invention is not limited thereto. The scope of the present invention is indicated not by the above description but by the appended claims.

### DESCRIPTION OF REFERENCE NUMERALS

1: inner ring
2: outer ring
3: bearing space
4: ball
5: seal member
7: cage
14: cage circular annular portion
15: cage claw
16: pocket bottom
17: circular annular portion radially outer surface
18: circular annular portion radially inner surface
19: seal opposed surface
20: grease release tapered surface for grease release
21: pocket surface
22: radially inner edge of the pocket surface
23: claw radially inner surface
25: grease passage groove
26: grease receiving recess
27: chamfer
28: grease groove
C: position where the pocket bottom and the circular annular portion radially inner surface intersect with each other
P: pitch circle

## Claims

1. A grease-enclosed ball bearing comprising:
an inner ring (1);
an outer ring (2) arranged radially outward of, and coaxially with, the inner ring (1);
a plurality of balls (4) disposed in an annular bearing space (3) defined between the inner ring (1) and the outer ring (2);
an annular seal member (5) disposed at one axial end of the bearing space (3);
grease enclosed in the bearing space (3); and
a cage (7) retaining the balls (4),
wherein the cage (7) includes:
a cage circular annular portion (14) that circumferentially extends; and
cage claws (15) having a cantilevered structure, and axially extending from the cage circular annular portion (14) so as to be located between respective circumferentially adjacent pairs of the balls (4), and
wherein each of the cage claws (15) has:
pocket surfaces (21) opposed to surfaces of corresponding ones of the balls (4), respectively; and
a claw radially inner surface (23) circumferentially extending from radially inner edges (22) of the pocket surfaces (21) so as to be opposed to an outer periphery of the inner ring (1),
wherein the claw radially inner surface (23) of each of the cage claws (15) is provided with an inclination for guiding grease that is displaced radially outward from a root of the cage claw (15) toward a distal end of the cage claw (15),
wherein the cage circular annular portion (14) has, on a cross section passing through centers of the balls (4) and orthogonal to a circumferential direction,
pocket bottoms (16) axially opposed to the respective balls (4); and
a circular annular portion radially inner surface (18) axially extending from radially inner ends of the pocket bottoms (16), and radially opposed to the outer periphery of the inner ring (1), and
an inclination start position of the inclination of the claw radially inner surface (23) of each of the cage claws (15) is a position (C) where a corresponding one of the pocket bottoms (16) and the circular annular portion radially inner surface (18) intersect with each other,
**characterized in that**
the cage circular annular portion (14) further has a circular annular portion radially outer surface (17) radially opposed to an inner periphery of the outer ring (2), and
wherein a radial gap between the outer periphery of the inner ring (1) and the circular annular portion radially inner surface (18) is larger than a radial gap between the inner periphery of the outer ring (2) and the circular annular portion radially outer surface (17).

2. The grease-enclosed ball bearing according to claim 1, wherein the claw radially inner surface (23) of each of the cage claws (15) is entirely disposed radially outward of the circular annular portion radially inner surface (18).

3. The grease-enclosed ball bearing according to claim 1 or 2, wherein the cage circular annular portion (14) further has:
a seal opposed surface (19) axially opposed to the seal member (5); and
a grease release tapered surface (20) obliquely connecting the seal opposed surface (19) and the circular annular portion radially inner surface (18) together.

4. The grease-enclosed ball bearing according to any one of claims 1 to 3, wherein the circular annular portion radially inner surface (18) is formed with grease receiving recesses (26) each axially extending through the cage circular annular portion (14) at an intermediate position between a corresponding circumferentially adjacent pair of the balls (4).

5. The grease-enclosed ball bearing according to any one of claims 1 to 4, wherein each of the cage claws (15) is formed with a grease passage groove (25) radially extending through the cage claw (15) at the intermediate position between the corresponding circumferentially adjacent pair of the balls (4), the grease passage groove (25) having a depth that allows the grease passage groove (25) to axially go into the cage claw (15) from the distal end of the cage claw (15) toward the root of the cage claw (15) beyond a pitch circle (P) connecting the centers of the balls (4).

6. The grease-enclosed ball bearing according to any one of claims 1 to 5, wherein axial lengths of the cage claws (15) are longer than radii of the balls (4), and
wherein the claw radially inner surface (23) of each of the cage claws (15) has an inner diameter smaller than the pitch circle (P), which connects the centers of the balls (4), such that the radially inner edges (22) of the pocket surfaces (21) of the cage claw (15) are located radially inward of the pitch circle (P).

7. The grease-enclosed ball bearing according to any one of claims 1 to 6, wherein a chamfer (27) having a size of 0.5 mm or more is disposed at an edge where each of the pocket surfaces (21) of each of the cage claws (15) and the claw radially inner surface (23) of the cage claw (15) intersect with each other.

8. The grease-enclosed ball bearing according to any one of claims 1 to 7, wherein each of the cage claws (15) is formed with grease grooves (28) radially extending to cross the respective pocket surfaces (21) of the cage claw (15).

9. The grease-enclosed ball bearing according to any one of claims 1 to 8, wherein the cage (7) is formed of a resin composition in which a fiber-reinforced material is added to a resin material.

10. The grease-enclosed ball bearing according to any one of claims 1 to 9, wherein an enclosed amount of the grease enclosed is set to 38% or more of a total space volume obtained by subtracting a volume of the cage (7) and a volume of the balls (4) from a volume of the bearing space (3).

11. The grease-enclosed ball bearing according to any one of claims 1 to 10, wherein the enclosed amount of the grease enclosed is set to 100% or more of a stationary space volume obtained by subtracting, from the volume of the bearing space (3), the volume of the cage (7) and a volume of a passage region of the balls (4) during rotation of the bearing.

## Patentansprüche

1. Mit Fett gefülltes Kugellager, umfassend:
einen Innenring (1);
einen Außenring (2), der radial außerhalb des Innenrings (1) und koaxial zu diesem angeordnet ist;
eine Vielzahl von Kugeln (4), die in einem ringförmigen Lagerraum (3) angeordnet sind, der zwischen dem Innenring (1) und dem Außenring (2) definiert ist;
ein ringförmiges Dichtungselement (5), das an einem axialen Ende des Lagerraums (3) angeordnet ist;
im Lagerraum (3) eingeschlossenes Schmierfett; und
einen Käfig (7), der die Kugeln (4) hält,
wobei der Käfig (7) umfasst:
einen kreisförmigen Ringabschnitt (14) des Käfigs, der sich in Umfangsrichtung erstreckt; und
Käfigklauen (15) mit einer freitragenden Struktur, die sich axial vom kreisförmigen Ringabschnitt (14) des Käfigs erstrecken, so dass sie sich zwischen jeweils umlaufend benachbarten Paaren der Kugeln (4) befinden, und
wobei jede der Käfigklauen (15) aufweist:
Taschenflächen (21), die jeweils den Oberflächen der zugehörigen Kugeln (4) gegenüberliegen; und
eine radial innere Klauenfläche (23), die sich in Umfangsrichtung von radialen Innenkanten (22) der Taschenflächen (21) erstreckt, sodass sie einem Außenumfang des Innenrings (1) gegenüberliegt,
wobei die radial innere Klauenfläche (23) jeder der Käfigklauen (15) mit einer Neigung versehen ist, um Schmierfett zu leiten, das von einem Fuß der Käfigklaue (15) in Richtung eines distalen Endes der Käfigklaue (15) radial nach außen verdrängt wird,
wobei der kreisförmige Ringabschnitt (14) des Käfigs in einem Querschnitt, der durch die Mittelpunkte der Kugeln (4) verläuft und senkrecht zur Umfangsrichtung steht,
Taschenböden (16) aufweist, die den jeweiligen Kugeln (4) axial gegenüberliegen; und
eine radiale Innenfläche (18) des kreisförmigen Ringabschnitts, die sich axial von den radial inneren Enden der Taschenböden (16) erstreckt und dem Außenumfang des Innenrings (1) radial gegenüberliegt, und
wobei eine Neigungsstartposition der Neigung der radial inneren Klauenfläche (23) jeder der Käfigklauen (15) eine Position (C) ist, an der sich ein entsprechender der Taschenböden (16) und die radiale Innenfläche (18) des kreisförmigen Ringabschnitts einander schneiden,
**dadurch gekennzeichnet, dass**
der kreisförmige Ringabschnitt (14) des Käfigs ferner eine radiale Außenfläche (17) des kreisförmigen Ringabschnitts aufweist, die einem Innenumfang des Außenrings (2) radial gegenüberliegt, und
wobei ein radialer Spalt zwischen dem Außenumfang des Innenrings (1) und der radialen Innenfläche (18) des kreisförmigen Ringabschnitts größer ist als ein radialer Spalt zwischen dem Innenumfang des Außenrings (2) und der radialen Außenfläche (17) des kreisförmigen Ringabschnitts.

2. Das mit Fett gefüllte Kugellager nach Anspruch 1, wobei die radial innere Klauenfläche (23) jeder der Käfigklauen (15) vollständig radial außerhalb der radialen Innenfläche (18) des kreisförmigen Ringabschnitts angeordnet ist.

3. Das mit Fett gefüllte Kugellager nach Anspruch 1 oder 2, wobei der kreisförmige Ringabschnitt (14) des Käfigs ferner aufweist:
eine dem Dichtungselement (5) axial gegenüberliegende Dichtungsgegenfläche (19); und
eine sich verjüngende Schmierfettfreigabefläche (20), die die Dichtungsgegenfläche (19) und die radiale Innenfläche (18) des kreisförmigen Ringabschnitts schräg miteinander verbindet.

4. Das mit Fett gefüllte Kugellager nach einem der Ansprüche 1 bis 3, wobei die radiale Innenfläche (18) des ringförmigen Ringabschnitts mit Fettaufnahmeaussparungen (26) versehen ist, die sich jeweils axial durch den kreisförmigen Ringabschnitt (14) des Käfigs an einer Zwischenposition zwischen einem entsprechenden, in Umfangsrichtung benachbarten Paar der Kugeln (4) erstrecken.

5. Das mit Fett gefüllte Kugellager nach einem der Ansprüche 1 bis 4, wobei jede der Käfigklauen (15) mit einer Schmierfettdurchgangsnut (25) versehen ist, die sich radial durch die Käfigklaue (15) an der Zwischenposition zwischen dem entsprechenden, in Umfangsrichtung benachbarten Paar der Kugeln (4) erstreckt, wobei die Schmierfettdurchgangsnut (25) eine Tiefe aufweist, die es ermöglicht, dass die Schmierfettdurchgangsnut (25) axial in die Käfigklaue (15) hineinreicht, vom distalen Ende der Käfigklaue (15) in Richtung des Fußes der Käfigklaue (15) über einen Teilkreis (P) hinaus, der die Mittelpunkte der Kugeln (4) verbindet.

6. Das mit Fett gefüllte Kugellager nach einem der Ansprüche 1 bis 5, wobei die axialen Längen der Käfigklauen (15) größer sind als die Radien der Kugeln (4), und
wobei die radial innere Klauenfläche (23) jeder der Käfigklauen (15) einen Innendurchmesser aufweist, der kleiner ist als der Teilkreis (P), der die Mittelpunkte der Kugeln (4) verbindet, so dass die radialen Innenkanten (22) der Taschenflächen (21) der Käfigklaue (15) radial innerhalb des Teilkreises (P) liegen.

7. Das mit Fett gefüllte Kugellager nach einem der Ansprüche 1 bis 6, wobei an einer Kante, an der sich die Taschenflächen (21) jeder der Käfigklauen (15) und die radial innere Klauenfläche (23) der Käfigklaue (15) schneiden, eine Fase (27) mit einer Größe von 0,5 mm oder mehr angeordnet ist.

8. Das mit Fett gefüllte Kugellager nach einem der Ansprüche 1 bis 7, wobei jede der Käfigklauen (15) mit Fettrillen (28) versehen ist, die sich radial erstrecken, um die jeweiligen Taschenflächen (21) der Käfigklaue (15) zu kreuzen.

9. Das mit Fett gefüllte Kugellager nach einem der Ansprüche 1 bis 8, wobei der Käfig (7) aus einer Harzzusammensetzung gebildet ist, bei der einem Harzmaterial ein faserverstärktes Material zugesetzt ist.

10. Das mit Fett gefüllte Kugellager nach einem der Ansprüche 1 bis 9, wobei die Menge des enthaltenen Fetts auf 38 % oder mehr des Gesamtraumvolumens eingestellt ist, das sich ergibt, wenn das Volumen des Käfigs (7) und das Volumen der Kugeln (4) vom Volumen des Lagerraums (3) abgezogen werden.

11. Das mit Fett gefüllte Kugellager nach einem der Ansprüche 1 bis 10, wobei die Menge des enthaltenen Fetts auf 100 % oder mehr eines stationären Raumvolumens eingestellt ist, das sich ergibt, wenn vom Volumen des Lagerraums (3) das Volumen des Käfigs (7) und ein Volumen eines Durchgangsbereichs der Kugeln (4) während der Drehung des Lagers abgezogen werden.

## Revendications

1. Roulement à billes rempli de graisse comprenant:
une bague intérieure (1);
une bague extérieure (2) disposée radialement à l'extérieur de la bague intérieure (1) et coaxialement à celle-ci;
une pluralité de billes (4) disposées dans un espace de roulement annulaire (3) défini entre la bague intérieure (1) et la bague extérieure (2);
un élément d'étanchéité annulaire (5) disposé à une extrémité axiale de l'espace de roulement (3);
de la graisse prévue dans l'espace de roulement (3) ; et
une cage (7) retenant les billes (4),
dans lequel la cage (7) comprend:
une partie annulaire circulaire (14) de la cage qui s'étend de manière circonférentielle; et
des griffes de cage (15) présentant une structure en porte-à-faux et s'étendant axialement à partir de la partie annulaire circulaire de la cage (14) de manière à être situées entre des paires respectives de billes (4) adjacentes de manière circonférentielle, et
dans lequel chacune des griffes de cage (15) comporte:
des surfaces de logement (21) opposées aux surfaces des billes (4) correspondantes, respectivement ; et
une surface radialement intérieure (23) de la griffe s'étendant de manière circonférentielle à partir des bords radialement intérieurs (22) des surfaces de logement (21) de manière à être opposée à une périphérie extérieure de la bague intérieure (1),
dans laquelle la surface radialement intérieure (23) de chacune des griffes de cage (15) est pourvue d'une inclinaison destinée à guider la graisse qui est déplacée radialement vers l'extérieur depuis une base de la griffe de cage (15) vers une extrémité distale de la griffe de cage (15),
dans laquelle la partie annulaire circulaire de la cage (14) présente, sur une section transversale passant par les centres des billes (4) et orthogonale à une direction circonférentielle,
des fonds de poche (16) axialement opposés aux billes respectives (4); et
une surface radiale interne (18) de la partie annulaire circulaire de la cage s'étendant axialement à partir des extrémités radiales internes des fonds de poche (16), et radialement opposée à la périphérie externe de la bague interne (1), et
une position de début d'inclinaison de la surface radialement intérieure (23) de la griffe de chacune des griffes de cage (15) est une position (C) où l'un des fonds de poche (16) et la surface radialement intérieure (18) de la partie annulaire circulaire se coupent l'un l'autre,
**caractérisée en ce que**
la partie annulaire circulaire de la cage (14) comporte en outre une surface radiale extérieure de la partie annulaire circulaire (17) située radialement en face d'une périphérie intérieure de la bague extérieure (2), et
dans lequel un espace radial entre la périphérie extérieure de la bague intérieure (1) et la surface radialement intérieure (18) de la partie annulaire circulaire est plus grand qu'un espace radial entre la périphérie intérieure de la bague extérieure (2) et la surface radialement extérieure (17) de la partie annulaire circulaire.

2. Roulement à billes rempli de graisse selon la revendication 1, dans lequel la surface radialement intérieure (23) de chacune des griffes de cage (15) est entièrement disposée radialement à l'extérieur de la surface radialement intérieure (18) de la partie annulaire circulaire.

3. Roulement à billes rempli de graisse selon les revendications 1 ou 2, dans lequel la partie annulaire circulaire de la cage (14) comporte en outre:
une surface opposée au joint (19) située axialement en face de l'élément d'étanchéité (5); et
une surface conique de libération de graisse (20) reliant obliquement la surface opposée au joint d'étanchéité (19) et la surface radialement intérieure de la partie annulaire circulaire (18) l'une à l'autre.

4. Roulement à billes rempli de graisse selon l'une quelconque des revendications 1 à 3, dans lequel la surface radialement intérieure (18) de la partie annulaire circulaire est pourvue d'évidements de réception de graisse (26) s'étendant chacun axialement à travers la partie annulaire circulaire de la cage (14) à une position intermédiaire entre une paire correspondante de billes (4) adjacentes de manière circonférentielle.

5. Roulement à billes rempli de graisse selon l'une quelconque des revendications 1 à 4, dans lequel chacune des griffes de cage (15) est pourvue d'une rainure de passage de graisse (25) s'étendant radialement à travers la griffe de cage (15) à la position intermédiaire entre la paire correspondante de billes (4) adjacentes de manière circonférentielle, la rainure de passage de graisse (25) ayant une profondeur qui permet à la rainure de passage de graisse (25) de s'étendre axialement dans la griffe de cage (15) depuis l'extrémité distale de la griffe de cage (15) vers la base de la griffe de cage (15) au-delà d'un cercle primitif (P) reliant les centres des billes (4).

6. Roulement à billes rempli de graisse selon l'une quelconque des revendications 1 à 5, dans lequel les longueurs axiales des griffes de cage (15) sont supérieures aux rayons des billes (4), et
dans lequel la surface radialement intérieure (23) de chacune des griffes de cage (15) présente un diamètre intérieur inférieur au cercle primitif (P) reliant les centres des billes (4), de sorte que les bords radialement intérieurs (22) des surfaces de poche (21) de la griffe de cage (15) sont situés radialement à l'intérieur du cercle primitif (P).

7. Roulement à billes rempli de graisse selon l'une quelconque des revendications 1 à 6, dans lequel un chanfrein (27) d'une taille de 0,5 mm ou plus est disposé au niveau d'un bord où chacune des surfaces de poche (21) de chacune des griffes de cage (15) et la surface radialement intérieure (23) de la griffe de cage (15) se croisent.

8. Roulement à billes rempli de graisse selon l'une quelconque des revendications 1 à 7, dans lequel chacune des griffes de cage (15) est pourvue de rainures de graisse (28) s'étendant radialement pour traverser les surfaces de poche respectives (21) de la griffe de cage (15).

9. Roulement à billes rempli de graisse selon l'une quelconque des revendications 1 à 8, dans lequel la cage (7) est formée d'une composition de résine dans laquelle un matériau renforcé de fibres est ajouté à un matériau de résine.

10. Roulement à billes rempli de graisse selon l'une quelconque des revendications 1 à 9, dans lequel la quantité de graisse de remplissage est fixée à 38 % ou plus d'un volume d'espace total obtenu en soustrayant un volume de la cage (7) et un volume des billes (4) d'un volume de l'espace de roulement (3).

11. Roulement à billes rempli de graisse selon l'une quelconque des revendications 1 à 10, dans lequel la quantité de graisse de remplissage est fixée à 100 % ou plus d'un volume d'espace fixe obtenu en soustrayant, du volume de l'espace de roulement (3), le volume de la cage (7) et un volume d'une zone de passage des billes (4) pendant la rotation du roulement.
